# FASCICULE DE BREVET EUROPEEN

(11) **EP 1 392 533 B1**
(45) Date de publication et mention de la délivrance du brevet: **04.07.2007**
(21) Numéro de dépôt: 02733148.7
(22) Date de dépôt: 06.06.2002
(51) Int. Cl.: B60H 1/00

(54) **APPAREIL DE CHAUFFAGE, DE VENTILATION ET/OU DE CLIMATISATION**
HEIZUNGS-, BELÜFTUNGS- UND/ODER KLIMAANLAGEN
HEATING, VENTILATING AND/OR AIR CONDITIONING APPARATUS

(30) Priorité: 06.06.2001 DE 10127339
(43) Date de publication de la demande: 03.03.2004
(73) Titulaire: Valeo Klimasysteme GmbH, 96476 Rodach (DE)
(72) Inventeur: FIENE, Andreas, 38179 Grosse Schwülper (DE); KREIENBORG, Ludger, 38118 Braunschweig (DE)
(74) Mandataire: Lemaire, Marc
(86) Numéro de dépôt international: PCT/IB2002/002088
(87) Numéro de publication internationale: WO 2002/098690

(56) Documents cités:
- EP-A- 0 461 421
- EP-A- 0 845 375
- FR-A- 2 751 922

## Description

La présente invention concerne un appareil de chauffage, de ventilation et/ou de climatisation qui est particulièrement adapté pour une utilisation dans un véhicule automobile.

Un tel appareil de chauffage, de ventilation et/ou de climatisation est généralement équipé d'un boîtier répartiteur dans lequel peuvent être définis au moins deux trajets de circulation de l'air, généralement pour de l'air chaud et pour de l'air froid ou frais vers une zone de mélange. L'air chaud est généralement obtenu en le faisant passer à travers un échangeur thermique chauffant en aval duquel peut être raccordé un dispositif de chauffage électrique optionnel. Si une climatisation est prévue, l'air froid ou frais passe généralement à travers un évaporateur dans lequel il est refroidi. Dans la majorité des appareils disponibles actuellement qui sont équipés d'un climatiseur, l'air à chauffer passe également à travers l'évaporateur du circuit de climatisation avant de passer dans l'échangeur thermique chauffant. Dans la zone de mélange, on essaie de régler par une commande en conséquence côté air et/ou côté échangeur thermique une température souhaitée telle qu'elle devra être indiquée dans l'habitacle du véhicule.

Les appareils de chauffage, de ventilation et/ou de climatisation connus disposent généralement d'au moins deux sorties dont au moins une peut être alimentée avec de l'air en provenance de la zone de mélange. Une pluralité de sorties est cependant prévue dans la majorité des cas au niveau du boîtier répartiteur comme, par exemple, une sortie dite de dégivrage qui sert à diffuser de l'air sur le pare-brise, une sortie d'aération personnelle ainsi qu'une sortie au niveau des pieds et, en option, une sortie pour les pieds à l'arrière du véhicule.

Des systèmes élaborés permettent de disposer de différentes zones climatiques dans le véhicule. Il existe, par exemple, des solutions qui autorisent une division en zone droite et gauche et/ou arrière et avant. Une exigence qui est toujours imposée aux appareils de chauffage, de ventilation et/ou de climatisation de ce type est de les réaliser de la manière la plus compacte possible, les chutes de pression dans les trajets de circulation devant être les plus faibles possibles. Un autre problème rencontré est le fait que le diffuseur d'air disposé directement sous le pare-brise et relié à la sortie de dégivrage doit être alimenté en air chaud, alors que le souhait général est que l'air qui sort des diffuseurs pour venir frapper directement les personnes soit relativement frais alors qu'il est souhaité que l'air qui doit être diffusé au niveau des pieds soit généralement plus chaud. Ces indications aérothermiques et spécifiques à l'utilisateur viennent cependant s'opposer à une configuration compacte de l'appareil de chauffage, de ventilation et/ou de climatisation, car il faut la plupart du temps prévoir plusieurs zones de mélange qui doivent, le cas échéant, être alimentées par des conduits de dérivation spécifiques.

Par conséquent, un objet de la présente invention est de perfectionner un appareil de chauffage, de ventilation et/ou de climatisation, notamment pour un véhicule automobile, équipé d'un boîtier répartiteur dans lequel peuvent être définis au moins deux trajets de circulation de l'air vers une zone de mélange et qui dispose d'au moins deux sorties dont une au moins peut être alimentée avec de l'air en provenance de la zone de mélange, de manière à pouvoir présenter de manière simple une répartition voulue en couches de température avec un encombrement minimum et des trajets de circulation les plus courts possibles.

Un exemple d'un tel appareil est divulgué dans EP845375 qui comprend un conduit pour acheminer de l'air chaud vers une sortie. Un autre exemple est présenté dans EP461421 qui montre un système avec deux volets.

Conformément à l'invention, cet objet est réalisé en ce que la zone de mélange, sur le plan de la technique des fluides, est branchée en amont d'un dispositif qui réduit, plus précisément exclut presque entièrement une action réciproque de l'air qui sort de la zone de mélange avec l'air qui se déplace dans une direction différente. Autrement dit, la répartition souhaitée en couches de températures conformément à l'invention est obtenue par le fait que l'air qui sort de la chambre de mélange est découplé par rapport à l'autre air. Il a été constaté avec beaucoup d'étonnement que la dynamique des fluides dans l'ensemble de l'appareil est ici considérablement plus simple à gérer.

Dans l'appareil de chauffage, de ventilation et/ou de climatisation conforme à l'invention, il est aussi avantageusement prévu un dispositif qui permet une déviation de l'air de l'un des trajets de circulation définissables afin de pouvoir délivrer l'air qui se déplace dans une direction différente de celui qui sort de la zone de mélange. Dans une forme de réalisation particulièrement préférentielle, ce dispositif peut disposer d'une déviation sélective et/ou réglable. Il est ainsi possible, par exemple, de dévier l'air chaud en provenance d'un trajet de circulation qui est destiné à être acheminé vers le pare-brise, la proportion restante d'air chaud pouvant être renvoyée vers la zone de mélange.

Le dispositif branché en aval de la zone de mélange comprend avantageusement au moins un élément qui définit une ou plusieurs traversées de type conduit. Il est ainsi possible de constituer un conduit d'air mélangé, par exemple, qui délivre l'air en provenance de la zone de mélange directement vers le diffuseur personnel et/ou la sortie au niveau des pieds. Bien évidemment, il est également possible de prévoir plusieurs traversées de type conduit qui, le cas échéant, peuvent également disposer de sections communes.

Il est en outre préféré que le dispositif branché en aval de la zone de mélange comprennent au moins un élément qui définit une ou plusieurs traversées de type conduit dans lesquelles peut passer l'air qui se déplace dans une direction différente de celui qui sort de la zone de mélange. En prévoyant de telles traversées de type conduit, qui peuvent éventuellement disposer de sections communes, il est possible de proposer une circulation parfaitement définie, par exemple une circulation d'air chaud vers la sortie de dégivrage qui sert à diffuser de l'air sur le pare-brise.

La section des traversées de type conduit peut être à chaque fois constante ou varier en fonction des exigences en matière de circulation. Il est possible, par exemple, que la section des traversées de type conduit s'élargisse et/ou se rétrécisse dans le sens de circulation.

Les traversées de type conduit forment avantageusement un angle compris entre 30 et 180° l'une par rapport à l'autre, notamment d'environ 90°. Autrement dit, les traversées de type conduit permettent de proposer de manière définie un croisement des trajets de circulation. Il convient par exemple de mentionner le cas dans lequel l'air mélangé est acheminé dans un conduit central vers le diffuseur personnel et les sorties au niveau des pieds, alors que l'air chaud pur qui n'est pas passé par la zone de mélange est acheminé des deux côtés de ce conduit et pratiquement perpendiculairement à celui-ci dans deux conduits vers la sortie de dégivrage.

Dans une forme de réalisation préférentielle, les traversées de type conduit sont réalisées adjacentes les unes aux autres afin de permettre une utilisation la plus efficace possible de l'espace de montage.

Le dispositif branché en aval de la zone de mélange peut avantageusement comprendre des moyens de commande de la circulation de l'air, par exemple des clapets ou équivalent, qui peuvent notamment être disposés dans au moins une, dans plusieurs ou dans toutes les traversées de type conduit. Le fait de prévoir des moyens de commande supplémentaires de la circulation de l'air permet de régler à volonté les paramètres aérothermiques.

Dans une forme de réalisation préférentielle, les trajets de circulation de l'air parviennent dans la zone de mélange de telle manière qu'il se produit dans celle-ci une répartition en couches de température ou un gradient de température qui peut être conservé au moins en partie dans le dispositif branché en aval de la zone de mélange. Il est ainsi possible, par exemple, de délivrer de l'air relativement chaud dans la zone des pieds par rapport à l'air relativement frais dans la zone de diffusion personnelle et de l'air très chaud à la sortie de dégivrage, dans quel cas il convient de noter que l'air chaud destiné à la sortie de dégivrage ne provient pas de la zone de mélange.

En variante, il est également possible d'alimenter la zone de mélange par les deux trajets de circulation de l'air de manière à y obtenir un mélange d'air pratiquement homogène, par exemple si une différence de température entre l'air dans la zone des pieds et dans la zone du diffuseur personnel n'est pas nécessaire ou n'est pas prévue.

Le dispositif branché en aval de la zone de mélange comprend avantageusement au moins une cloison de séparation, par exemple pour permettre une répartition de l'air mélangé dans une moitié droite et une moitié gauche du véhicule, la cloison de séparation servant notamment à supporter une, plusieurs ou toutes les traversées de type conduit et/ou le dispositif qui permet une déviation de l'air.

Pour terminer, il est préféré que les traversées de type conduit se chevauchent au moins par section dans une vue de dessus et/ou une vue de côté. Il est ainsi possible, par exemple, que la traversée de type conduit destinée à conduire l'air mélangé en provenance de la zone de mélange se trouve dans une zone essentiellement coaxiale par rapport à une autre traversée de type conduit dans laquelle passe, par exemple, l'air chaud à destination de la sortie de dégivrage.

D'autres avantages et caractéristiques de la présente invention résultent également de la description uniquement donnée à titre d'exemple d'une forme de réalisation actuellement préférentielle dans laquelle il est fait référence aux dessins joints, dans lesquels:
- Figure 1: illustre une vue de côté schématique d'un appareil de chauffage, de ventilation et/ou de climatisation conforme à l'invention;
- Figure 2: illustre une section de la représentation illustrée dans la figure 1 dans une vue en perspective;
- Figure 3: illustre le dispositif branché en aval de la zone de mélange vu de dessus du côté de la zone de mélange, une vue de côté opposée à la figure 1 et dans une vue de l'arrière par rapport à la zone de mélange, mais légèrement isométrique.

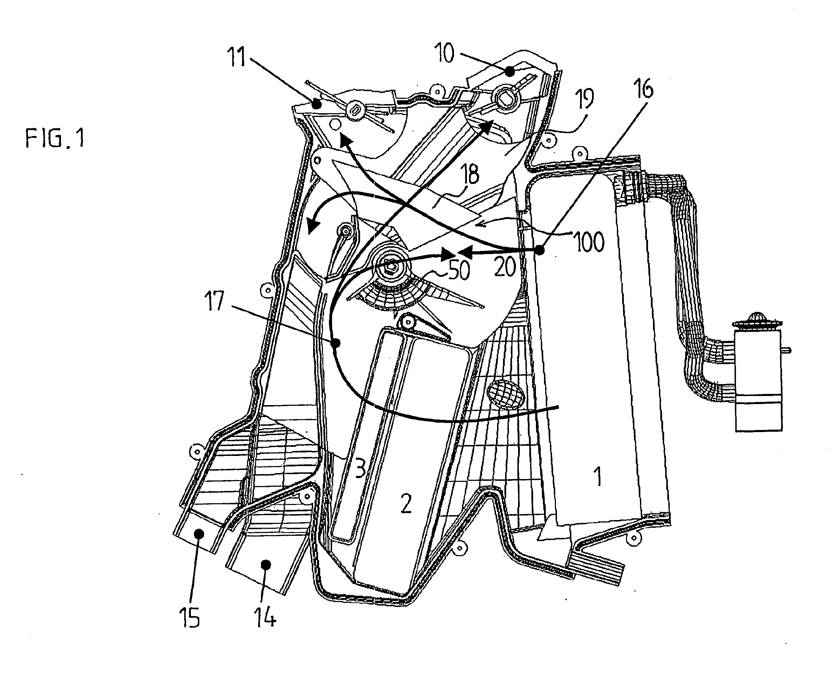

Une forme de réalisation actuellement préférentielle d'un appareil de chauffage, de ventilation et/ou de climatisation conforme à l'invention est décrite en commençant par se référer à la figure 1. L'appareil comprend de manière courante en elle-même un évaporateur 1 qui est branché à un circuit de climatisation correspondant pour refroidir l'air. Sur le plan de la technique des fluides, un ventilateur non illustré est branché en amont de l'évaporateur 1, lequel peut amener de l'air frais et/ou de l'air de circulation pour le faire passer à travers l'appareil.

Dans la section inférieure de l'évaporateur 1 vient se raccorder, du point de vue de la technique des fluides, un échangeur thermique 2 muni d'un chauffage électrique 3 optionnel branché en aval. L'air qui sort de l'évaporateur 1 peut pénétrer directement dans une zone de mélange 20 au-dessus de l'échangeur thermique chauffant 2, laquelle, dans la forme de réalisation illustrée, vient se raccorder directement à l'évaporateur et est réalisée au-dessus de l'échangeur thermique chauffant 2. L'air qui sort de la section inférieure de l'évaporateur 1 passe ainsi, conformément au trajet de circulation 17, à travers l'échangeur thermique chauffant 2 et le chauffage électrique, par exemple un corps chauffant à CTP 3, pour finalement être dévié vers le haut. Comme illustré, un dispositif 50 est prévu à la sortie de l'échangeur thermique chauffant 2 et un peu au-dessus de celui-ci, lequel, dans la forme de réalisation illustrée, est prévu sous la forme d'un clapet en coque et permet de dévier une part variable de l'air chaud et d'acheminer l'air chaud restant vers la zone de mélange 20. Dans la forme de réalisation illustrée, le dispositif 50 peut fermer la sortie de la chambre de mélange 20 à l'aide d'un prolongement radial de manière à ce que la totalité de l'air qui sort de l'évaporateur 1 soit forcé de passer à travers l'échangeur thermique chauffant 2 et acheminé vers la sortie de dégivrage et/ou la chambre de mélange 20. Cela correspond au mode dégivrage maximum ou « chauffage à fond ».

Au-dessus du dispositif 50 est formée une traversée de type conduit 18 qui, comme illustré, achemine l'air en provenance de la zone de mélange 20 vers la sortie du diffuseur personnel 11 ainsi que vers d'autres sorties 14, 15, par exemple pour la zone des pieds à l'arrière et vers le conduit de ventilation de la console centrale.

Une traversée de type conduit 19 est formée pratiquement perpendiculairement à celle-ci, laquelle permet d'amener le trajet d'air chaud 17 vers la sortie de dégivrage 10.

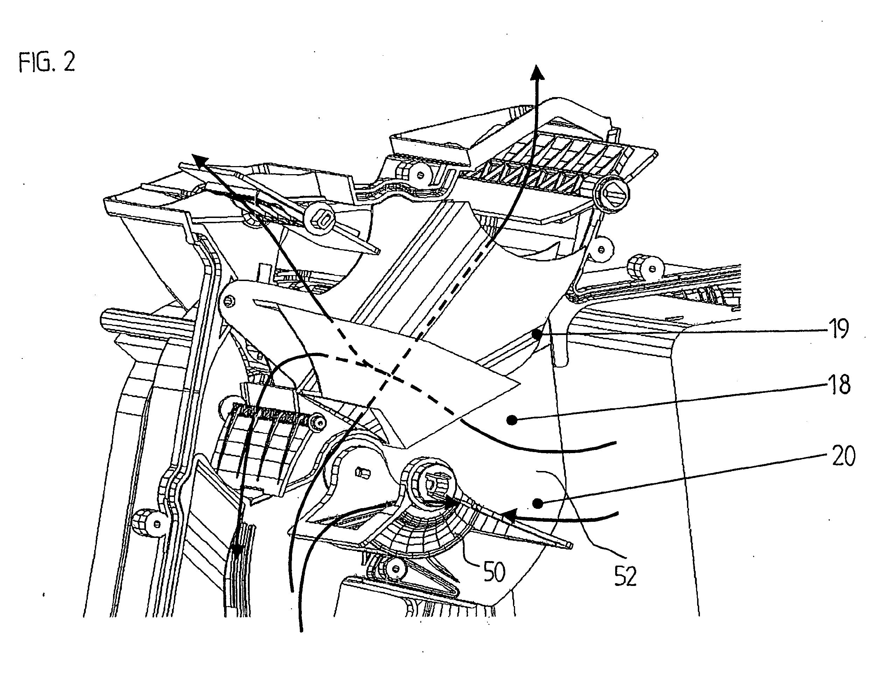

Comme permet de le constater la vue détaillée en perspective de la figure 2, le dispositif 50 est articulé à une cloison de séparation 52 au niveau de laquelle sont définies les traversées de type conduit 18 et 19, respectivement pour l'air mélangé et l'air chaud. Il convient de noter que dans la représentation de la figure 2 seule est illustrée la moitié du système de conduits qui fait face à l'observateur. Autrement dit, une configuration symétrique correspondante est prévue dans l'exemple de réalisation représenté.

Comme on peut nettement le constater, une partie de l'air qui sort de la zone de mélange 20 passe dans la traversée de type conduit à côté de l'air chaud qui est acheminé dans la traversée de type conduit 19 plus proche de la cloison de séparation.

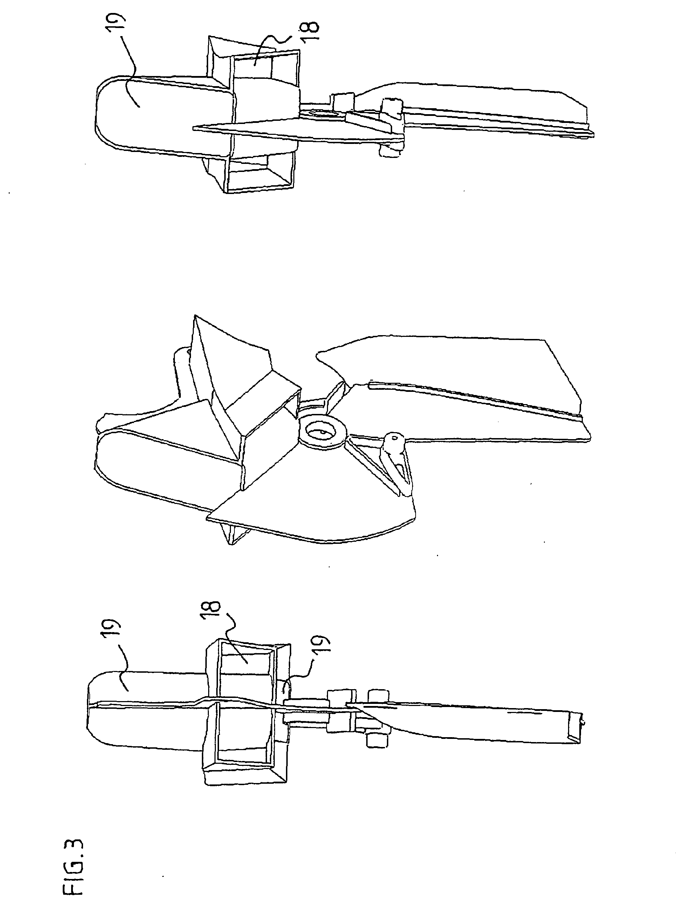

La représentation détaillée de la figure 3 illustre la configuration précise et l'arrangement des traversées de type conduit 18, 19. Dans la section gauche de la figure 3, le dispositif 100 branché en aval de la zone de mélange 20 est représenté dans une vue pratiquement du coté de la zone de mélange. Gomme on peut le constater, la traversée de type conduit 19 pour l'air chaud repose sur la cloison de séparation 52 alors que celle-ci est entourée par la traversée de type conduit 18 pour évacuer l'air mélangé en provenance de la zone de mélange 20. Comme permet de le constater la représentation du centre de la figure 3, le dispositif 100 permet ainsi de guider l'air froid ou mélangé sortant de la zone de mélange 20 de manière à éliminer toute influence par l'air chaud, car celui-ci est acheminé par les traversées de type conduit 19 correspondantes. Conformément à l'invention, il est ainsi possible de réaliser un croisement de courants d'air découplé.

La partie droite de la figure 3 représente finalement une vue du dispositif 100 dans laquelle on peut reconnaître l'entrée de la traversée de type conduit 19 et la sortie de la traversée de type conduit 18. Comme illustré, les traversées de type conduit 8, 19 se superposent ainsi au moins partiellement à la fois dans la vue de côté (voir illustration du centre de la figure 3) et dans une vue de dessus, comme permet de le constater une comparaison entre les représentations de la partie droite et de la partie gauche de la figure 3.

En conclusion, il est possible de constater que l'invention permet une répartition en couches de la température conformément aux exigences sans qu'il soit nécessaire de réaliser une structure complexe ni contraintes d'encombrement excessives. Et grâce aux courants d'air qui se croisent, il n'y pratiquement pas de chutes de pression ni de tourbillons.

Bien que la présente invention ait ici été entièrement décrite en se référant à une forme de réalisation actuellement préférentielle, il convient de comprendre que l'invention n'est pas limitée à cette forme de réalisation, mais au contraire englobe de nombreuses variantes au choix telles qu'elles sont définies dans les revendications. Il est ainsi possible, par exemple, de prévoir des moyens de commande de la circulation de l'air complémentaires dans une ou plusieurs traversées de type conduit. Il n'est pas non plus impérativement nécessaire que la disposition des sorties de type conduit soit symétrique par rapport à la cloison de séparation, ni de considérer comme restrictive la disposition des entrées et des sorties dans les traversées de type conduit respectives. Il faut indiquer, uniquement à titre d'exemple, qu'il est également possible de prévoir les entrées dans le système de traversée de type conduit 19 à l'extérieur des traversées de type conduit 18.

## Revendications

1. Appareil de chauffage, de ventilation et/ou de climatisation, notamment pour un véhicule automobile, équipé d'un boîtier répartiteur dans lequel peuvent être définis au moins deux trajets de circulation de l'air (16,17), respectivement d'air froid ou frais (16) et d'air chaud (17), vers une zone de mélange (20) et qui dispose d'au moins deux sorties (10, 11, 14, 15) dont une au moins (11, 14, 15) peut être alimentée avec de l'air en provenance de la zone de mélange (20), et comprenant un dispositif de répartition (100) branché en aval de la zone de mélange (20)
**caractérisé en ce que** le dispositif de répartition (100) d'air définit au moins deux conduits (18, 19) acheminant de l'air qui sort de la zone de mélange (20) et de l'air qui sort du trajet de circulation d'air chaud (17) de façon découplée.

2. Appareil de chauffage, de ventilation et/ou de climatisation selon la revendication 1, **caractérisé en ce qu'**il est prévu un dispositif de réglage (50) qui permet une déviation notamment sélective et/ou réglable de l'air de l'un des trajets de circulation (16, 17) afin de pouvoir délivrer l'air qui se déplace dans une direction différente de celui qui sort de la zone de mélange (20).

3. Appareil de chauffage, de ventilation et/ou de climatisation selon la revendication 1 ou 2, **caractérisé en ce que** le dispositif branché en aval (100) de la zone de mélange (20) comprend au moins un élément qui définit un ou plusieurs conduit(s) (18).

4. Appareil de chauffage, de ventilation et/ou de climatisation selon l'une des revendications 1 à 3, **caractérisé en ce que** le dispositif (100) branché en aval de la zone de mélange (20) comprend au moins un élément qui définit un ou plusieurs conduit(s) (19) dans lesquelles peut passer l'air qui se déplace dans une direction différente de celui qui sort de la zone de mélange (20).

5. Appareil de chauffage, de ventilation et/ou de climatisation selon les revendications 3 et 4, **caractérisé en ce que** conduits (18, 19) forment un angle compris entre 30 et 180°.

6. Appareil de chauffage, de ventilation et/ou de climatisation selon la revendication 5, **caractérisé en ce que** les conduits (18, 19) forment un angle de 90° l'un par rapport à l'autre.

7. Appareil de chauffage, de ventilation et/ou de climatisation selon l'une des revendication 5 ou 6, **caractérisé en ce que** chaque conduit (18, 19) est voisin au moins d'un autre conduit (19, 18) prévue pour l'autre air.

8. Appareil de chauffage, de ventilation et/ou de climatisation selon l'une des revendications 5 à 7, **caractérisé en ce que** le dispositif (100) branché en aval de la zone de mélange (20) comprend des moyens de commande de la circulation de l'air, notamment dans au moins un conduit (18, 19).

9. Appareil de chauffage, de ventilation et/ou de climatisation selon l'une des revendications 5 à 7, **caractérisé en ce que** les conduits (18, 19) se chevauchent au moins par section dans une vue de dessus et/ou une vue de côté.

10. Appareil de chauffage, de ventilation et/ou de climatisation selon l'une des revendications 1 à 9, **caractérisé en ce que** les deux trajets de circulation de l'air (16, 17) parviennent dans la zone de mélange (20) de telle manière qu'il se produit dans celle-ci une répartition en couches de température ou un gradient de température qui est conservé au moins en partie dans le dispositif (100) branché en aval de la zone de mélange.

11. Appareil de chauffage, de ventilation et/ou de climatisation selon l'une des revendications 1 à 9, **caractérisé en ce que** les deux trajets de circulation de l'air (16, 17) alimentent la zone de mélange de manière à y obtenir un mélange d'air pratiquement homogène.

12. Appareil de chauffage, de ventilation et/ou de climatisation selon l'une des revendications 1 à 11, **caractérisé en ce que** le dispositif (100) branché en aval de la zone de mélange (20) comprend avantageusement au moins une cloison de séparation (52), notamment configurée comme élément support pour au moins un conduit (18, 19) et/ou le dispositif (50).

## Claims

1. Heating, ventilating and/or air conditioning device, in particular for a motor vehicle, equipped with a distributor housing in which at least two paths can be defined for circulating the air (16, 17), cold or cool air (16) and warm air (17), respectively, towards a mixing zone (20), and which has a least two outlets (10, 11, 14, 15) at least one of which (11, 14, 15) can be supplied with air coming from the mixing zone (20), and including a distribution device (100) connected downstream from the mixing zone (20), **characterised in that** the air distribution device (100) defines at least two ducts (18, 19) conveying air that exits from the mixing zone (20) and air that exits from the warm air flow path (17) in an uncoupled manner.

2. Heating, ventilating and/or air conditioning, device of claim 1, **characterised in that** it is provided with a control device (50) which, in particular, enables selective and/or adjustable diversion of the air from one of the flow paths (16, 17) in order to be able to deliver the air that is moving in a direction different from that which exits from the mixing zone (20).

3. Heating, ventilating and/or air conditioning device as claimed in claim 1 or 2, **characterised in that** the device connected downstream (100) from the mixing zone (20) includes at least one element that defines one or more duct(s) (18).

4. Heating, ventilating and/or air conditioning device as claimed in one of claims 1 to 3, **characterised in that** the device (100) connected downstream from the mixing zone (20) includes at least one element that defines one or more duct(s) (19) in which the air can pass that is moving in a direction different from that which exits from the mixing zone (19).

5. Heating, ventilating and/or air conditioning device as claimed in claims 3 and 4, **characterised in that** ducts (18, 19) form an angle ranging between 30 and 180º.

6. Heating, ventilating and/or air conditioning device of claim 5, **characterised in that** the ducts (18, 19) form an angle of 90° in relation to each other.

7. Heating, ventilating and/or air conditioning device as claimed in one of claims 5 or 6, **characterised in that** each duct (18, 19) is adjacent to at least one other duct (19, 18) provided for the other air.

8. Heating, ventilating and/or air conditioning device as claimed in one of claims 5 to 7, **characterised in that** the device (100) connected downstream from the mixing zone (20) includes means for controlling the air flow, in particular in at least one duct (18, 19).

9. Heating, ventilating and/or air conditioning device as claimed in one of claims 5 to 7, **characterised in that** the ducts (18, 19) overlap at least cross-sectionally in a top view and/or a side view.

10. Heating, ventilating and/or air conditioning device as claimed in one of claims 1 to 9, **characterised in that** the two air flow paths (16, 17) arrive in the mixing zone (20) in such a way that a layered temperature distribution or temperature gradient occurs therein, which is at least partially maintained in the device (100) connected downstream from the mixing zone.

11. Heating, ventilating and/or air conditioning device as claimed in one of claims 1 to 9, **characterised in that** the two air flow paths (16, 17) supply the mixing zone so as to obtain an almost homogenous mixture of air therein.

12. Heating, ventilating and/or air conditioning device as claimed in one of claims 1 to 11, **characterised in that** the device (100) connected downstream from the mixing zone (20) advantageously includes at least one separating partition (52), configured, in particular, as a support element for at least one duct (18, 19) and/or the device (50).

## Patentansprüche

1. Heiz-, Kühl- und/oder Klimagerät, insbesondere für ein Kraftfahrzeug, mit einem Verteilerkasten, in dem mindestens zwei zu einer Mischzone (20) führende Luftkreisläufe (16,17), nämlich ein Kalt- bzw. Frischluftkreislauf (16) und ein Warmluftkreislauf (17) vorhanden sein können, und das mindestens zwei Auslässe (10, 11, 14, 15) besitzt, von denen mindestens einer (11, 14, 15) mit aus der Mischzone (20) kommender Luft versorgt werden kann und eine hinter der Mischzone (20) angebrachte Luftverteilvorrichtung (100) besitzt,
**dadurch gekennzeichnet, dass** die Luftverteilvorrichtung (100) mindestens zwei Luftleitungen (18, 19) bildet, in denen die aus der Mischzone (20) kommende Luft und die aus dem Warmluftkreislauf (17) kommende Luft getrennt voneinander befördert wird.

2. Heiz-, Kühl- und/oder Klimagerät nach Patentanspruch 1, **dadurch gekennzeichnet, dass** eine Einstellvorrichtung (50) vorgesehen ist, mit der die Luft aus einem der beiden Luftkreisläufe (16, 17) insbesondere selektiv und/oder verstellbar umgeleitet werden kann, um die Luft weiterleiten zu können, die in eine andere Richtung als die aus der Mischzone (20) kommende Luft strömt.

3. Heiz-, Kühl- und/oder Klimagerät nach Patentanspruch 1 oder 2, **dadurch gekennzeichnet, dass** die hinter der Mischzone (20) angeschlossene Luftverteilvorrichtung (100) mindestens ein Element besitzt, das eine oder mehrere Luftleitungen (18) bildet.

4. Heiz-, Kühl- und/oder Klimagerät nach Patentanspruch 1 bis 2, **dadurch gekennzeichnet, dass** die hinter der Mischzone (20) angeschlossene Luftverteilvorrichtung (100) mindestens ein Element besitzt, das eine oder mehrere Luftleitungen (19) bildet, in denen die in eine andere Richtung als die aus der Mischzone (20) kommende Luft strömen kann.

5. Heiz-, Kühl- und/oder Klimagerät nach Patentanspruch 3 und 4, **dadurch gekennzeichnet, dass** die Luftleitungen (18, 19) einen Winkel zwischen 30 und 180 Grad bilden.

6. Heiz-, Kühl- und/oder Klimagerät nach Patentanspruch 5, **dadurch gekennzeichnet, dass** die Luftleitungen (18, 19) einen Winkel von 90 Grad zueinander bilden.

7. Heiz-, Kühl- und/oder Klimagerät nach Patentanspruch 5 oder 6, **dadurch gekennzeichnet, dass** zu jeder Luftleitung (18, 19) jeweils mindestens eine benachbarte Luftleitung (19, 18) vorhanden ist, die für die andere Luft vorgesehen ist.

8. Heiz-, Kühl- und/oder Klimagerät nach Patentanspruch 5 bis 7, **dadurch gekennzeichnet, dass** die hinter der Mischzone (20) angeschlossene Luftverteilvorrichtung (100) mindestens in einer Luftleitung (18, 19) Mittel zum Steuern der Luftströmung besitzt.

9. Heiz-, Kühl- und/oder Klimagerät nach Patentanspruch 5 bis 7, **dadurch gekennzeichnet, dass** sich die Luftleitungen (18, 19) in Draufsicht oder in Seitenansicht gesehen mindestens abschnittsweise überschneiden.

10. Heiz-, Kühl- und/oder Klimagerät nach Patentanspruch 1 bis 9, **dadurch gekennzeichnet, dass** die beiden Luftkreisläufe (16, 17) so in die Mischzone (20) gelangen, dass sich in dieser eine Verteilung der Luft nach. Temperaturschichten oder ein Temperaturgradient ergibt, der mindestens teilweise in der hinter der Mischzone angeschlossenen Luftverteilvorrichtung (100) erhalten bleibt.

11. Heiz-, Kühl- und/oder Klimagerät nach Patentanspruch 1 bis 9, **dadurch gekennzeichnet, dass** die beiden Luftkreisläufe (16, 17) so in die Mischzone gelangen, dass in dieser eine praktisch einheitliche Luftvermischung ergibt.

12. Heiz-, Kühl- und/oder Klimagerät nach Patentanspruch 1 bis 11, **dadurch gekennzeichnet, dass** die hinter der Mischzone (20) angeschlossene Luftverteilvorrichtung (100) vorzugsweise mindestens eine Trennwand (52) aufweist, die insbesondere als Stütze für mindestens eine Luftleitung (18, 19) oder für die Einstellvorrichtung (50) ausgebildet ist.
